# EUROPEAN PATENT APPLICATION

(11) **EP 1 460 089 A1**
(43) Date of publication of application: **22.09.2004**
(21) Application number: 04386006.3
(22) Date of filing: 13.02.2004
(51) Int. Cl.: C08F 2/44, A61K 9/26

(54) **Controlled release of antimicrobial substances from polymer matrices**

(30) Priority: 14.02.2003 GR 2003100081
(71) Applicant: Argo S.A., 19400 Koropi (GR); Forth/Ice-HT, 26504 Patras (GR)
(72) Inventor: Katsichtis, Charilaos, 11635 Athens (GR); Tsartolia, Eygenia, 17562 P. Faliron (GR); Papadopoulos, Athanasios, 19004 Spata (GR); Iconomopoulou, Sophia, 11635 Athens (GR); Andreopoulou, Katerina, 30300 Naypaktos (GR); Amaia Soto, Beobide, 26500 Rio (GR); Kallitsis, Joannis, 26442 Patras (GR); Voyiatzis, Georgios, 26442 Patras (GR)

(57) **Abstract**

A method of incorporation of biostatic agents in polymer matrices that have been subject to some degree of cross-linking. The method employs either the simultaneous polymerisation, _{[h94]}using the method of a suspension or emulsion of the monomer, the initiator, a cross-linking agent and the biostatic compound to be _{[h95]}incorporated, or the modification of an inert polymer by the introduction of suitable biostatic groups. The relative concentration of the biostatic agent and the cross-linking agent, in conjunction with the chemical composition of the polymer receptor, provides the capability to control the release/diffusion of the biostatic agent in liquids _{[h96]}in contact to the polymer matrix, such as natural serum, water-ethanol mixtures. Ultraviolet-visible absorption spectrometry is used for controlling the rate of release/diffusion of the biostatic agent which is incorporated in the polymer matrix_{[h97]} into the particular liquid phase. Raman spectrometry, Raman _{[h98]}imaging and infrared_{[h99]} reflectance techniques are used as methods for the control of the migration of the biostatic agent from the _{[h100]}bulk of the polymer towards its surface.

## Description

The present invention relates to a method of incorporation in polymer matrices of substances with a wide or narrow range of antimicrobial activity, in a manner that it is possible to control their diffusion and activity out of [h4]polymer carriers, i.e. packages of ocular and injectable solutions, into[h5] these solutions. In particular, the present invention relates to the suitable incorporation of low molecular weight organic compounds and/or the mixing of oligomers or polymers that bear some biostatic group in a polymer matrix during the polymerisation process, where some degree of cross-linking develops so that their controlled activity and/or release is achieved when [h6] the polymer matrix or its mixture with another polymer matrix come into contact with liquids. It must be noted, for example, that the carriers of ocular and other sterile solutions are at present produced under clean room[h7] conditions and are then sterilised with gamma - radiation and filled in a sterile environment. The usual problem is that after its initial opening by the consumer, the ocular products ceases being sterile. Consequently, the use of pipette - fitted bottles with bacteriostatic properties will limit the microbe load during the consequent use of the product.

There is an intensive dispute and confusion regarding the manner that low molecular weight[h8] compounds with biostatic activity act when incorporated in any manner to polymer matrices. The questions that exist and to which no secure answer is given in the literature are associated with whether these biostatic compounds diffuse[h9] developing[h10] antimicrobial activity through the surface of the polymer matrix to liquids in contact with the polymer [h11], such as natural serum, 10% ethanol solution, etc., or whether they act from the surface of the polymer matrix. It would be desired if they exhibited satisfactory antimicrobial activity either by contact without their release/diffusion or with their controlled release/diffusion towards the medium which is to be protected against any microbial load, whereas in parallel, the low molecular weight biostatic compounds located in the bulk[h12] of the polymer matrix migrate towards its[h13] surface. In the particular[h14] publication by B.D. Kalyon and U. Olgum in the Am. J. Infect. Control 2001; 29:124-125, it was claimed that when Triclosan is bound into polystyrene[h15] by mixing in the molten phase, only the part of Triclosan located on the surface of polystyrene[h16] in contact with the liquid medium and only this[h17], is diffused to this medium and develops anti-microbial activity[a18], whereas the rest which is located in the bulk of the polymer matrix remains under-exploited. The above researchers were led to the same conclusions when they used a 95% ethanol solution, into which it is known that Triclosan is easily dissolved. The Microban Company that is concerned with biostatic products like Triclosan does not admit (Am. J. Infect. Control 2001; 29:428-430) the claims of the two researchers, without though objecting[h19] them with certain scientific comments.

The objective of the present invention is to provide a different method of incorporation of low molecular weight biostatic compounds in polymer matrices which will give the ability to control their release/diffusion in any liquid and preferably natural serum or mixtures of ethanol - water. This objective has been achieved either [h20] with simultaneous polymerisation using[h21] the method of suspension or emulsion of the polymer, the initiator, one cross-linking agent and the low molecular weight compound with biostatic properties that will be incorporated, or[h22] with the modification of an inert polymer with the introduction of suitable biostatic groups. The term of biostatic properties is provided to substances that apart their passive defensive role in external attacks to the polymer product, they play the role of antiseptic, anti-haze agent or of inhibitor of growth - multiplication of bacteria and fungi by destroying the micro-organisms that may exist or those introduced either during the filling of various preparations[h23] or at any other time or those present in external or internal places[h24] around the mouths provided for use of the concoction[h25].

In the present invention there are three parameters that control the release / diffusion of an agent with biostatic properties [h26]from a polymer matrix towards the liquid medium for protection: a) the degree of cross-linking achieved; (b) the chemical composition of the polymer receptor and (c) the overall quantity of the agent with biostatic properties that has been incorporated in the system polymer-cross-linking agent - agent with biostatic properties.

### In the present invention:

As a monomer can be used[h27] any vinyl or [h28]vinylidene monomer as well as any derivative[h29] of styrene[h30], of acrylic or methacrylic acid and their esters.

As a cross-linking agent can be used [h31] any agent that can cause and/or increase (preferably in a controlled manner) the degree of cross-linking in the polymer, and preferably divinylbenzene.

As an initiator can be used [h32]any compound that creates in any manner free radicals, and more specifically by heating, radiation, mechanical action, and preferably benzoylperoxide (BPO) or azo-isobutylnitrile (AIBN).

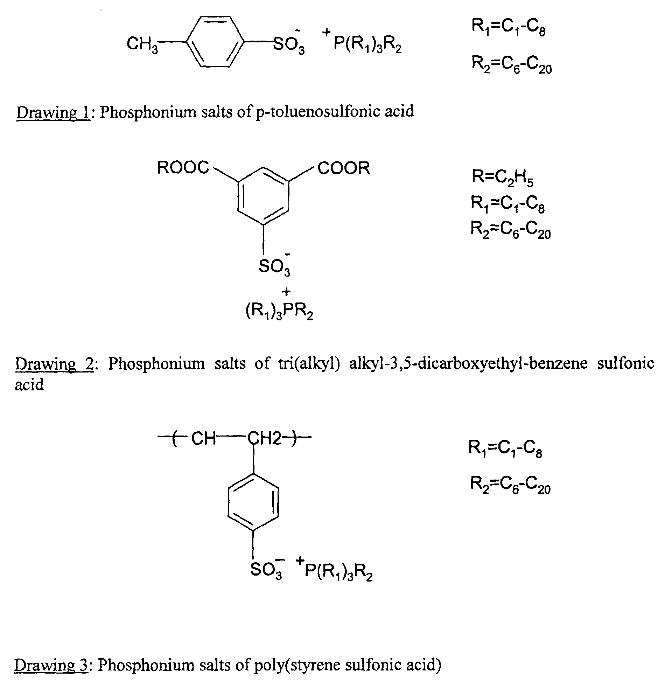

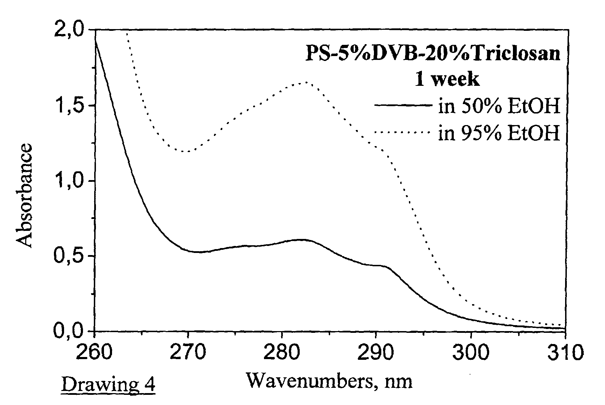

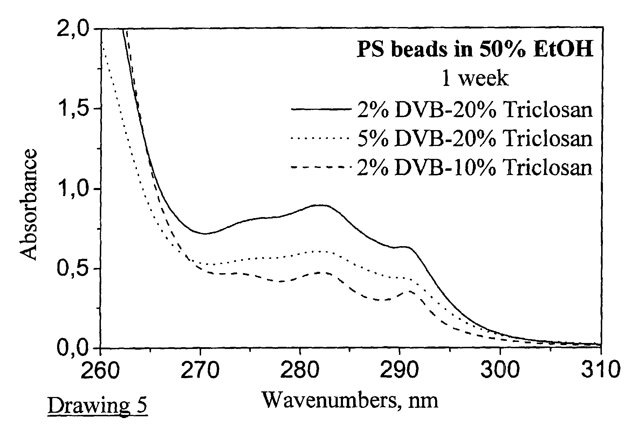

As a low molecular weight biostatic compound can be used any compound with biostatic properties and preferably Triclosan, the common name of 2,4,4',-trichloro-2-[h33]hydroxydiphenylether, also known as CH 3635, Irgasan Ch 3635, Irgasan DP 300, Ster-Zac and Irgaguard B-1000, and Triclocarban, the common name of 2-(4-chlorophenyl)-1-(,4-dichlorophenyl)urea, also known as TCC, Cutisan, Solubacter and trichlorocarbanilide[h34], or 3-methyl-pyrazol and trichloro acetylnitril as well as the Sodium salt of the oxide -1 of [h35]pyridinothiol-2, 3-iodopropynyl [h36]of butyl carbamide and 2,6 dichloropyridine. Furthermore, phosphonic salts of para-toluenesulphonic acid (Drawing 1) as well as phosphonic salts of tri-alkylalkylo-3,5-dicarboxybenzyl sulphonic acid (Drawing 2) [h37]can also be used as biostatic compounds. Furthermore, all isomers [h38]or polymers of the above compounds can be considered as biostatic compounds, as for example the phosphonic salts of poly(styrenesulphonic acid) [h39] (Drawing 3). In this case, the mixing of the polymer excipient with the polymer or oligomer that contains the biostatic group is effected in any manner and preferably with the film casting or mixing in molten phase method.

Thus, a mixture of the monomer 0-98%, the cross-linking[h40] reactant 0-50%, the biostatic agent 1-99% and the initiator 0-1% is added to a pre-formed suspension or emulsion and the mixture is heated to 40-90 degrees Celsius for 2 to 24 hours. The product of this composition or the modified polymer is dispersed [h41]in a polymer matrix so that the active constituent accounts for 0.5% to 1% of the mixture. The polymer matrix can be for example either polyolefin or polyamide or polyester, preferably poly(ethylene terephthalate)[h42], polycarbonate ester of diphenol -A, poly(ethylene naphthalate)[h43], poly(butylene terepthalic ester), or polyurethane or a physical mixture of the above or compatibilised mixtures of the above using compatibilisers.

The ultra-violet - visible absorption spectroscopy is defined as the method of control of the rate of release/diffusion of the biostatic agent incorporated in the polymer matrix in a particular liquid phase in contact with the polymer matrix.

The Raman scattering spectroscopy and the Raman imaging and/or Raman mapping techniques with excitation[h44] from the ultraviolet to the near infrared with preference to the visible, as well as infrared reflectance techniques with a preference to [h45]attenuate total reflectance are used as methods for the control of the migration of a biostatic agent incorporated to a polymer matrix from the [h46]bulk of the polymer towards its surface.

### Example of the process for suspension polymerisation

Gelatine (0.48 g) dissolved in warm, de-ionised and de-aerated water (100 ml), NaOH 10N (0.65 ml), H3BO3 (0.40g) and Betonite (0.70g) were introduced to a three-neck spherical bottle equipped with a mechanical stirrer, a thermometer, a reciprocating condenser (cooler) and a nozzle for introducing gas argon. The mixture is stirred at room temperature for 30 min, whereas the bottle is scanned with argon streams. In the sequel, the desired quantity of benzoyl-peroxide (BPO), Triclosan, styrol and divinyl-benzene (DVB) is added to the above mixture. The suspension formed is vividly stirred at 80 degrees Celsius for 8 hours. Following cooling to room temperature, the beads -sediment of polystyrol/DVB/Triclosan are filtered, careful washing in water follows and they are dried under reduced pressure [h47]to constant weight.

### Example of introduction of active groups in a polymer matrix.

Polystyrenesulphonic sodium is dissolved in water and tributylalkyl phosphonic salt is added under stirring. The sediment collected is filtered, washed in water and dried under vacuum and heating.

### Example of the procedure for emulsion polymerisation

TO a spherical bottle equipped with a magnetic stirrer, cooler and argon inlet, 0.787 g of sodium dodekylsulphate, 0.202 g K2S207 (potassium perthiate), 0.075 g NaHCO3 and 45 ml de-aerated water are added. The mixture is stirred at 40 degrees Celsius for 30 minutes and in the sequel, the desired [h48]quantities of DVB, styrol and Triclosan are added. The emulsion formed is stirred at 80 degrees Celsius for 24 hours. In the sequel, once the mixture is cooled, the product is filtered, washed in water and dried under high vaccuum at room temperature.

### Example of dispersion of the active material in a polymer matrix.

Mixing in a solution: The active material is dissolved in ethanol and the polymer is added to the mixture in powder form so that a master batch is produced after evaporation of the solvent and drying.

Mixing in molten phase: The beads that contain the active component are mixed in solid state with the desired polymer and this solid mixture is molten and shaped.

Example of preparation of a sample for spectroscopic control of the release of Triclosan with ultraviolet-visible absorption spectroscopy.

Beads of various compositions are immersed in ethanol-water mixtures (preferably 10, 50 and 95% in ethanol), a quantity that in the case where the overall quantity of Triclosan was released by the beads in the solution, a solution of ethanol-water with a Triclosan concentration of preferably 0.01 or 0.02 g/ml [h49]would be formed. With the use of a syringe, two optical cells of 1x1x5 cubic centimetres are filled, one of the sample with the solution[h50] where a certain quantity of the bead [h51]is immersed, and the reference one with a respective virgin aqueous solution of ethanol. The absorption spectrum between 500 and 190 nm is recorded with a rate of 120 nm/min with a spectrometer slot opening of 0.5 micrometer. Each time, using a calibration curve made of known Triclosan solutions in the respective solutions [h52]aqueous of ethanol, the concentration of Triclosan in[h53] the respective solution is determined, i.e. in other words, the rate of its release/diffusion to the solution where the respective beads [h54]have been immersed is controlled. [h55] A similar procedure is followed if instead of mixtures of ethanol-water, natural serum is used.

Example of preparation of a sample for the [h56] spectroscopic control of Triclosan migration with vibrational [h57]µ Raman spectroscopy.

A quantity of 1.5 g of each bead composition is placed in a volumetric flask and filled with some aqueous solution of ethanol or serum of a volume of 100 ml. Each day, a quantity of the solid is removed, washed out with de-ionised water for avoiding precipitation by the wetting hymen of already released/dissolved Triclosan and is dried in a vaccuum oven at room temperature prior to the recording of the Raman spectra. Each time, 10 Raman spectra are taken for each sample from ten different points with a focusing field for each point of about 5 micrometers. In the sequel, once the ratio of the two peaks, that of the Triclosan at 773 cm-1 and another of the polymer (for [h58]polystyrene, the spectrum scattering zone is preferably bound between 960 and 1062 cm⁻¹) is compared with the respective ratio before the [h59]immersion of the beads to the solution. Hence, Triclosan remaining on the surface of the beads is determined. This, in conjunction with the release/diffusion to the solution results from the UV-Vis absorption experiments, reflects the degree of Triclosan migration from the bulk [h60] of the polymer towards its surface. The average of eight measurements is taken, after the two out of ten measurements which are furthest distant from the average are discarded. It is noted that [h61]as depth [h62]profile of the surface studied, or better as depth [h63]resolution of the Raman spectroscopy used, the penetration depth of the [h64]excitation radiation is determined, which depends on the wavelength of the radiation used, the focusing method (for example the arithmetic diaphragm of the objective focusing lens) and the absorption [h65] coefficient of the material [h66]examined at the particular [h67]excitation radiation. This depth [h68]profile may range between 1 and 25 micrometers, and preferably 2-4 micrometers.

The present invention will be further described with reference to the following examples of [h69]spectroscopic control of Triclosan release with UV-Vis absorption spectroscopy.

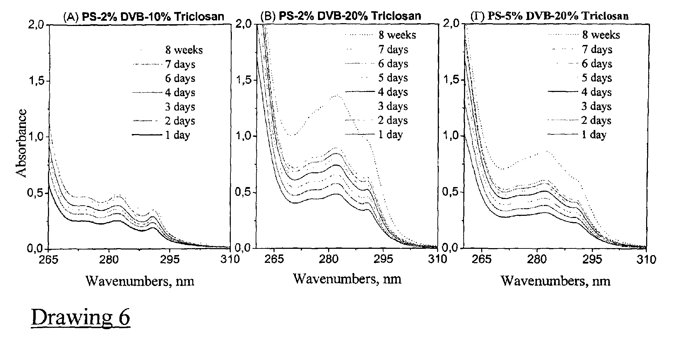

### Brief Description of Drawings 4-6

Drawing 4: Ultraviolet - visible absorption spectra of Triclosan that has been released / dissolved in aqueous ethanol [h70]solutions 50% (solid line) and 95% (broken line) after the [h71]immersion for one week of beads that were [h72]derived from the suspension polymerisation of styrene[h73] - 5% DVB - 20%, Triclosan, and which would give in the case where all the incorporated quantity of the biostatic agent would be released/dissolved [h74]a total Triclosan content in each solution of 0.02 g/ml.

Drawing 5: Ultraviolet - visible absorption spectra of Triclosan that has been released / dissolved in aqueous ethanol 50% solutions after the [h75]immersion for one week of beads that were[h76] derived from the suspension polymerisation of [h77]styrene - X% DVB - Y% Triclosan, and which would give in the case where all the incorporated quantity of the biostatic agent [h78]would be released/dissolved a total Triclosan content in each solution of 0.02 g/ml. For X=2 and Y= 20: solid line; for X=5 and Y = 20: broken line; for X=2 and Y=10: dotted line.

Drawing 6 : Ultraviolet - visible absorption spectra of Triclosan that has been released / dissolved in aqueous ethanol 95% solution after the [h79] immersion for different times ranging between 1 day and 8 weeks of beads that [h80]were derived from the suspension polymerisation of [h81]styrene - X% DVB - Y% Triclosan, and which would give in the case where all the incorporated quantity of the biostatic agent [h82]would be released/dissolved a total Triclosan content in each solution of 0.02 g/ml. For X=2 and Y = 10: left part of drawing (3-A); for X=2 and Y = 20: middle part of Drawing (3-B). For X=5 and Y=10: right part of drawing (3-C).

For the drawings 4-6 attached:

The differentiation in the release of the biostatic compound (Triclosan) after [h83]immersion of [h84]polystyrene samples that have been subject to some degree of cross-linking (5% DVB) and which have incorporated a certain quantity of biostatic compound (20% Triclosan) in different solutions of ethanol can be seen[h85] (Drawing 4).

The role of the degree of cross-linking as well as of the quantity of the biostatic compound incorporated to the polymer matrix on the release of the biostatic compound is observed. The higher degree of cross-linking appears to limit the release of the biostatic compound for the same quantity of biostatic compound which has been incorporated to the polymer matrix. The increased quantity of the biostatic compound that has been incorporated to the polymer matrix appears to favour the release of the biostatic compound for the same degree of cross-linking of the polymer matrix (Drawing 5 and 6).

### Key to the Drawings

Drawing 1: Phosphonic salts of para-toluenesulphonic acid
Drawing 2: Phosphonic salts of tri-alkyl alkylo 3,5 dicarbobenzyl sulphonic acid
Drawing 3: Phosphonic salts of poly(styrenesulphonic) acid
Drawing 4: Vertical Axis: Absorption
   Horizontal axis: Wave number, nm
   Title: 1 week
Drawing 5: Vertical Axis: Absorption
   Horizontal axis: Wave number, nm
   Title: 1 week
Drawing 6: Vertical Axis: Absorption
   Horizontal axis: Wave number, nm
   Series: 8 weeks, 7 days, 6 days, 5 days, 4 days, 3 days, 2 days, 1 day

## Claims

1. Method of incorporation of biostatic agents in polymer matrices that have been subject to some degree of cross-linking, **characterised by** that the relative concentration of the biostatic agent and the cross-linking agent in combination with the chemical composition of the polymer receptor provides the ability to control the release/diffusion of the biostatic agent in liquid media in contact to the polymer matrix.

2. Method of incorporation of biostatic agents in polymer matrices that have been subject to some degree of cross-linking, as referred to in claim 1, **characterised by** that the incorporation of the biostatic agent is [h86]achieved via polymerisation, mixing of an oligomer with a polymer or of polymer with polymer, in the presence of a compatibiliser or not.

3. Method of incorporation of biostatic agents in polymer matrices that have been subject to some degree of cross-linking, as referred to in claim 2, **characterised by** that the incorporation of the biostatic agent is [h87]achieved via polymerisation with the emulsion or suspension method of, [h88]among others, one or several monomer elements, one or several initiators, certainly [h89]one or several biostatic agents and certainly one or several cross-linking agents.

4. Method of incorporation of biostatic agents in polymer matrices that have been subject to some degree of cross-linking, as referred to in claim 3, **characterised by** that the monomer element can be any [h90]derivative of [h91]styrene, acrylic or methacrylic acid and their esters, as well as any vinyl or [h92]vinylidene monomer.

5. Method of incorporation of biostatic agents in polymer matrices that have been subject to some degree of cross-linking, as referred to in claim 3, **characterised by** that the initiator can be any compound which forms in any manner free radicals and in particular benzoylperoxide (BPO) and azoisobutylnitril (AIBN).

6. Method of incorporation of biostatic agents in polymer matrices that have been subject to some degree of cross-linking, as referred to in claim 3, **characterised by** that the biostatic agent can be Triclos an, Triclocarban, 3-methylpyrazol, trichloroacetonitril, the sodium salt of oxide-1 of pyridinothiol-2, 3-iodopropynyl of [h93]butyl carbamide, 2,6, dichloropyridine, phosphonic salts of para-toluenesulphonic acid, phosphonic salts of tri-alkyl alkylo 3,5 dicarbobenzyl sulphonic acid as well as the isomers, oligomers and polymers of the above compounds.

7. Method of incorporation of biostatic agents in polymer matrices that have been subject to some degree of cross-linking, as referred to in claim 3, **characterised by** that the cross-linking agent can be any agent that can bring some degree of cross-linking to the polymer matrix and preferably divinylbenzene, in the form of any pure isomer of it or any mixture of two or more isomers of it.

8. Method of incorporation of biostatic agents in polymer matrices that have been subject to some degree of cross-linking, as referred to in claim 3, **characterised by** that the incorporation of the polymer matrices with the biostatic agents in other polymer excipients is achieved by film casting or by mixing in molten phase.
